# EUROPEAN PATENT SPECIFICATION

(11) **EP 1 080 126 B1**
(45) Date of publication and mention of the grant of the patent: **22.10.2003**
(21) Application number: 99918851.9
(22) Date of filing: 27.04.1999
(51) Int. Cl.: C08G 18/71, C08G 65/36, C08G 18/10

(54) **METHOD OF BONDING A WINDOW TO A SUBSTRATE USING A SILANE FUNCTIONAL ADHESIVE COMPOSITION**
VERFAHREN ZUR FIXIERUNG EINES FENSTERS AN EINEM SUBSTRAT UNTER VERWENDUNG VON EINER SILANFUNKTIONELLEN KLEBSTOFFZUSAMMENSETZUNG
PROCEDE DE COLLAGE D'UNE VITRE SUR UN SUBSTRAT AU MOYEN D'UNE COMPOSITION ADHESIVE FONCTIONNELLE DE SILANE

(30) Priority: 27.04.1998 US 83125 P
(43) Date of publication of application: 07.03.2001
(73) Proprietor: ESSEX SPECIALTY PRODUCTS, INC., Auburn Hills, MI 48326 (US)
(72) Inventor: MAHDI, Syed Z., Rochester Hills, Michigan, MI 48307 (US); HSIEH, Harry, W., Troy, MI 48084 (US)
(74) Representative: Raynor, John
(86) International application number: PCT/US99/09107
(87) International publication number: WO 99/055755

(56) References cited:
- EP-A- 0 372 561
- EP-A- 0 459 304
- EP-A- 0 546 310
- EP-A- 0 819 749
- US-A- 5 403 881

## Description

This application claims the benefit of U.S. Provisional Application No. 60/083,125 filed on April 27, 1998.

This invention relates to a method of bonding a window to a substrate using a silane functional adhesive composition, which is capable of being used without the need for a primer.

Polyurethane sealant compositions typically are used for bonding non-porous substrates, such as glass, to nonporous substrates, these are described in U.S. Patent 4,374,237 and U.S. Patent 4,687,533. U.S. Patent 4,374,237 describes a polyurethane sealant containing urethane prepolymers, which have been further reacted with secondary amine compounds containing two silane groups. U.S. Patent 4,687,533 describes a polyurethane sealant containing urethane prepolymers, which contain silane groups which have been prepared by reacting a polyisocyanate having at least three isocyanate groups with less than an equivalent amount of an alkoxysilane having a terminal group containing active hydrogen atoms reactive with isocyanate groups to form an isocyanatosilane having at least two unreacted isocyanate groups. In a second step, the isocyanatosilane is mixed with additional polyisocyanate and the mixture is reacted with a polyol to form a polyurethane prepolymer having terminal isocyanato groups and pendant alkoxysilane groups. EP 856,569 discloses the use of polyoxyalkylene polymer terminated-with silanes having hydrolyzable groups bonded thereto blended with a polyoxyalkylene polymer having no cross-linking groups can be used for to bond glass to metal. These adhesives have not been a commercial success.

However, when such sealants are used to bond glass substrates to painted substrates, such as for window installation in vehicle manufacturing, the lap shear strength of the bonded substrate may be less than desirable for safety or structural purposes. Consequently, a separate paint primer comprising a solution of one or more silanes is typically applied to a painted substrate prior to the application of the sealant in most vehicle assembly operations for bonding the windshield and the rear window. The use of a primer in assembly operations is undesirable in that it introduces an extra step, additional cost, the risk of marring the paint surface if dripped on an undesired location and exposes the assembly line operators to additional chemicals. It would be desirable to provide a sealant which, when bonded to a painted substrate and cured, provides a bond with a higher lap shear strength, particularly when used in the absence of a paint primer.

In one embodiment, the invention is a method of bonding a window in a vehicle. The process comprises applying to a window an adhesive comprising a polymer having a flexible backbone and having silane moieties capable of silanol condensation and a tin catalyst; contacting the window with the window frame of a substrate wherein the adhesive is located between the window and the substrate; and allowing the adhesive to moisture cure. This process is especially useful when the substrate is unprimed metal, plastic, fiberglass or a composite, optionally coated with a coating.

The method of the invention allows the bonding of a window into a substrate without the need for priming the surface of the substrate to which it is bonded. This is especially useful for bonding windows into automobiles.

The adhesive composition of the invention contains a polymer having a flexible backbone and having silane moieties capable of silanol condensation. The polymer with a flexible backbone can be any polymer with a flexible backbone, which can be functionalized with a silane capable of silanol condensation. Among preferred polymer backbones are polyethers, polyurethanes, and polyolefins. Among more preferred polymer backbones are the polyethers and polyurethanes, with the most preferred being the polyethers.

Even more preferably the polymer is a polyether having silane moieties capable of silanol condensation. In one embodiment the polymer useful in the invention is a polymer as disclosed in Yukimoto et al., U.S. Patent 4,906707, Iwakiri et al. U.S. Patent 5,342,914, Yukimoto U.S. Patent 5,063,270, Yukimoto et al. U.S. Patent 5,011,900, and Suzuki et al. U.S. Patent 5,650,467. More preferably such polymers are oxyalkylene polymers containing at least one reactive silicon group per molecule. The oxyalkylene polymer which can be used in the present invention includes polymers having a molecular chain represented by formula (1);

―(R―O)_{*n*}― (1)

wherein R represents a divalent alkylene group having 2 to 4 carbon atoms, and preferably 2 to 3 carbon atoms; and n represents the number of repeating units. The oxyalkylene polymer may have a straight chain or a branched structure, or a mixed structure thereof. From the viewpoint of availability an oxyalkylene polymer having a repeating unit represented by formula (2) is preferred:

―CH(CH₃)CH₂O― (2)

The polymer may contain other monomer units but preferably comprises the monomer unit of formula (1) in a proportion of at least 50 percent by weight, particularly 80 percent by weight or more. Oxyalkylene polymers having a number average molecular weight (Mn) of 3,000 or more are preferred. Those having a Mn of 3,000 to 50,000 are even more preferred, and 3,000 to 30,000, are most preferred. Preferably the ratio (Mw/Mn) of weight average molecular weight (Mw) to number average molecular weight (Mn) is not higher than 1.6, which indicates that the polymer has an extremely narrow molecular weight distribution (that is, it is highly monodisperse). The Mw/Mn ratio is more preferably not higher than 1.5, and most preferably not higher than 1.4. While molecular weight distribution is measureable by various methods, it is generally measured by gel-permeation chromatography (GPC).

The terminology "reactive silicon group" or "reactive silane capable of silanol condensation" means a silicon-containing group in which a hydrolyzable group or a hydroxyl group is bonded to the silicon atom and which is cross-linkable through silanol condensation reaction. While not limited thereto, typical reactive silicon groups are represented by formula (3): 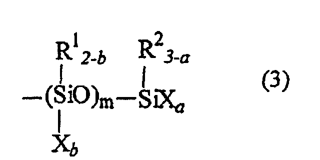 wherein R¹ and R² each represent an alkyl group having 1 to 20 carbon atoms, an aryl group having 6 to 20 carbon atoms, an aralkyl group having 7 to 20 carbon atoms or a triorganosiloxy group represented by (R')₃SiO―, wherein each of the three R' groups, which may be the same or different represents a monovalent hydrocarbon group having 1 to 20 carbon atoms; when there are two or more of each of the R¹ or R² groups, each of the R¹ and R² groups may be the same or different, and the R¹ can be the same or different from R²; X is independently in each occurrence a hydroxyl group or a hydrolyzable group; when there are two or more X groups; a is independently in each occurrence 0, 1, 2 or 3; and b is independently in each occurrence 0, 1 or 2; and m represents 0 or an integer of from I to 19; wherein a and b are chosen to satisfy the relationship a+Σ*b*≧1.

The hydrolyzable group represented by X is not particularly limited and is selected from conventional hydrolyzable groups. Specific examples are a hydrogen atom, a halogen atom, an alkoxy group, an acyloxy group, a ketoximate group, an amino group, an amido group, an acid amido group, an amino-oxy group, a mercapto group, and an alkenyloxy group. Preferred among them are a hydrogen atom, an alkoxy group an acyloxy group, a ketoximate group, an amino group, an amido group, an amino-oxy group, a mercapto group, and an alkenyloxy group. An alkoxy group is more preferred with a methoxy or ethoxy group being most preferred, for ease in handling due to its mild hydrolyzablility. One to three hydroxyl groups or hydrolyzable groups may be bonded to one silicon atom, and (a+Σ*b*) is preferably 1 to 5. Where two or more hydroxyl groups or hydrolyzable groups are present per reactive silicon group, they may be the same or different. The reactive silicon group may have one or more silicon atoms. A reactive silicon group in which silicon atoms are linked to form siloxane bondings may have as much as 20 silicon atoms. From the standpoint of availability, reactive silicon groups represented by formula (4) shown below are preferred: 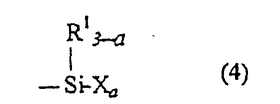 wherein R¹, X, and *a* are as defined above. R¹ is preferably an alkyl group, for example, methyl or ethyl; a cycloalkyl group, for example, cyclohexyl; an aryl group, for example, phenyl; an aralkyl group, for example, benzyl; or a triorgansiloxy group of formula (R')₃SiO- in which R' is methyl or phenyl. R¹ and R' are most preferably a methyl group.

The oxyalkylene polymer contains at least one, and preferably 1.1 to 6 reactive silicon groups per molecule. If the number of the reactive silicon group per molecule is less than 1, the polymer has insufficient curability, failing to achieve satisfactory rubbery elasticity. The reactive silicon group may be placed either at the terminal or in the inside of the molecular chain of the oxyalkylene polymer. An oxyalkylene polymer having the reactive silicon group at the molecular terminal thereof tends to provide a rubbery cured product having high tensile strength and high elongation.

The oxyalkylene polymer having a reactive silicon group is preferably obtained by introducing a reactive silicon group into the above-mentioned oxyalkylene polymer having a functional group. Processes for the preparation of such oxyalkylene polymers are disclosed in the U.S. Patents. Such oxyalkylene polymers containing at least one reactive silicone group per molecule may also be reacted with other groups or polymers reactive with such oxyalkylene polymer as disclosed in the above mentioned U.S. Patents.

In one embodiment, the flexible polymer used in the adhesive composition is a silyl terminated prepolymer prepared by contacting a polyol as described herein with an isocyanato silane having at least one silane moiety which has bonded thereto a hydrolyzable moiety under conditions such that the hydroxyl moieties of the polyol react with the isocyanate moieties of the isocyanatosilane so as to place a terminal silane moiety on the polyol, preferably the contacting is performed without addition of catalyst.

Polyols which may be used to prepare the silyl terminated prepolymer include polyols useful in preparing polyurethane prepolymers useful in adhesive and elastomer applications and are well-known to those skilled in the art. Bhat et al., U. S. Patent 5,672,652, see column 4, lines 5 to 60, discloses the preferred polyols useful in preparing the silane terminated prepolymers. The polyols are prepared by reacting an initiator, a compound having one or more active hydrogen atoms, with an alkylene oxide in the presence of a suitable catalyst under appropriate conditions for the alkylene oxide to react with one or more active hydrogen moieties of the initiator so as to add a series of ether units to the initiator thereby preparing a polyol. Initiators which are useful in this invention are well-known to those skilled in the art. Preferable initiator compounds which are employed to prepare the polyols are compounds having 1 to 8 active hydrogens, preferably 2 to 8, more preferably 2 to 4, and most preferably 2 to 3 active hydrogens. Preferable initiator compounds include, for example, alcohols, glycols, low molecular weight polyols, glycerine, trimethylol propane, pentaerythritol, glycosides, sugars, ethylene diamine, and diethylenetriamine. Particularly suitable glycols include, for example, ethylene glycol, 1,2-propylene glycol, 1,3-propylene glycol, 1,2-butylene glycol, 1,3-butylene glycol, 1,4-butylene glycol, 1,2-pentylene glycol, 1,3-pentylene glycol, 1,4-pentylene glycol, 1,5-pentylene glycol, 1,6-pentylene glycol, neopentyl glycol and various hexane diols, and mixtures thereof. Alkylene oxides useful include ethylene oxide, propylene oxide, 1,2-butylene oxide, 2,3-butylene oxide, or mixtures thereof. Most preferred alkylene oxides are ethylene oxide and propylene oxide, with propylene oxide most preferred. Combinations of the above mentioned alkylene oxides may be used in random or block polymers.

Preferably, the polyols used in preparing the silane terminated prepolymers are high molecular weight polyols prepared by the process which comprises first, contacting one or more initiators with one or more alkylene oxides in the presence of a catalyst comprising calcium having counterions of carbonate and a C₆ to C₁₀ alkanoate in a solvent which does not contain active hydrogen atoms. The mixture is exposed to conditions at which the alkylene oxides react with the compound containing more than one active hydrogen atom. Preferably the process is performed such that a polyol is prepared which has an equivalent weight of from 1,000 to 20,000, a poly dispersity of 1.30 or less, more preferably 1.20 or less, and a residual calcium level of from 0 to 2,000 parts per million (ppm), preferably from 0 to 1000 ppm, and more preferably from 200 to 1000 ppm. The preferred catalyst used in preparing the polyols is a calcium catalyst which contains both carbonate and C₆ to C₁₀ alkanoate counterions. The catalyst is dispersed or dissolved in a dispersant or solvent which has no active hydrogen atoms capable of initiating a polyether. Preferably, the solvent or dispersant is a hydrocarbon or mixture of hydrocarbons and more preferably, mineral spirits. Preferably the alkanoate counterions are C₈ residues of organic acids. In a preferred embodiment the alkanoates are derived from substantially pure organic carboxylic acids. Preferably the pure carboxylic acids are synthetic, as synthetic carboxylic acids generally exhibit higher purities. The carbonate counterions result from the contacting of the calcium and the organic carboxylic acid with carbon dioxide. The ratio of calcium ions to carboxylic acid ions is from 1.0:0.5 to 1.0:1.0. Preferably the ratio is between 1.0:0.5 and 1.0:0.9. The catalysts may be prepared by contacting the appropriate ratio of calcium hydroxide with a C₆₋₁₀ carboxylic acid and bubbling carbon dioxide through the mixture to form carbonate moieties. In the preparation of the preferred high molecular weight polyols, the initiator and alkylene oxides are generally contacted without the use of the solvent. Typically such contacting takes place in the absence of oxygen and atmospheric moisture, under an inert atmosphere, such as nitrogen or argon. The ratio of initiator to polyol is chosen to achieve the desired molecular weight or equivalent weight of the polyol. This ratio can be readily calculated by one skilled in the art. The amount of catalyst used is sufficient such that the residual catalyst remaining in the polyol upon completion of the reaction is 0 part per million or greater more preferably 200 parts per million or greater, even more preferably 300 parts per million or greater and most preferably 400 parts per million or greater, and preferably 2,000 parts per million or less, more preferably 1,000 parts per million or less, even more preferably 800 parts per million or less and most preferably 400 parts per million r less. In some embodiments it may be desirable to remove all of the residual catalyst where the catalyst is not needed for a further reaction and where the catalyst may impact the properties of the ultimate adhesive. This can be achieved by contacting the polyether polyol of the invention with magnesium silicate or phosphoric acid and filtering the polyol with diatomaceous earth. The complex of the calcium catalyst and the additives are removed on the filter material. In those embodiments where the calcium is removed, the resulting parts per million of the catalyst remaining in the polyol can be 0.

The reactants are reacted at a temperature of 90°C or greater, more preferably 100°C or greater and most preferably 110°C or greater, and preferably at a temperature of 150°C or less, more preferably 130°C or less and most preferably 120°C or less. The reactants are contacted for a time sufficient to prepare the desired high molecular weight polyol. The reaction time is controlled by the feed rate, reactor size, catalyst concentration and temperature. One skilled in the art can determine the appropriate time based on these variables. The unreacted polyols and initiators may be removed from the reaction by stripping them off using means well-known to those skilled in the art.

The polyether polyol preferably has an weight average molecular weight of 2,000 or greater, more preferably 3,000 or greater, even more preferably 6,000 or greater and most preferably 10,000 or greater. The resulting polyether polyol preferably has a weight average molecular weight of 20,000 or less, more preferably 16,000 or less, even more preferably 14,000 or less and most preferably 12,000 or less. The resulting high molecular weight polyol preferably has a polydispersity of 1.2 or less and more preferably 1.12 or less. Preferably the polyol used in the invention corresponds to Formula 5.

R³-((CH(R⁴)CH(R⁴)O)_{q}-H)ₚ (5)

wherein:
R³ is the residue of a compound having from 1 to 8 hydrogen atoms;
R⁴ is independently in each occurrence a C₁₋₆ saturated or unsaturated hydrocarbon chain;
q is independently in each occurrence a number such that the equivalent weight of the polyol is from 1,000 to 20,000; and p is independently in each occurrence from 1 to 8. Preferably R³ is a C₁₋₈ alkyl or cycloalkyl moiety or oxygen. More preferably, R³ is a C₂ to C₄ alkyl group or oxygen. R⁴ is preferably hydrogen, methyl or ethyl and most preferably hydrogen or methyl. q is independently in each occurrence a number such that the equivalent weight of the polyol is from 2,000 to 16,000, more preferably from 5,000 to 16.000 and most preferably from 10,000 to 14,000. p Is preferably 4 or less and more preferably 3 or less.

The polyols also demonstrate a low unsaturation level, preferably 0.04 milliequivalent of unsaturation per gram of polyol or less and more preferably 0.02 milliequivalent of unsaturation per gram of polyol or less.

Also included as useful polyols in this embodiment are polymers having a polyolefin backbone and terminal hydroxyl groups. Examples of such polyols are Kraton™ polyethylene/butylene polymers having terminal hydroxyls such as Kraton™ Liquid L-2203 polymer.

Polyalkyleneoxide based polyether polyols prepared using double metal cyanide catalysts can also be used in this invention. They are especially attractive because of their low unsaturation level.

The polyols can be reacted with an isocyanato silane to prepare reactive silicone functional prepolymers. Such isocyanato silane requires a silane group with a hydrolyzable moiety attached thereto. Isocyanato silanes useful in the invention are described in U.S. Patent No. 4,618,656 at column 3, lines 24 to 34. Preferably such isocyanato silanes correspond to formula 6. 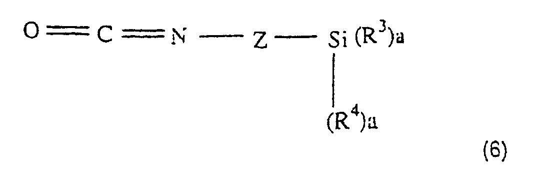 wherein a,R³ and R⁴ are as defined hereinbefore. Z is independently in each occurrence, C₁₋₄₀ divalent hydrocarbyl moiety. Z is preferably a C ₁₋₂₀ divalent hydrocarbyl moiety, preferably C ₁₋₁₀ alkylene, more preferably C₁₋₃ alkylene and most preferably methylene.

The reaction of the polyol with an organo functional silane can be performed using conventional processes such as those disclosed in U.S. Patent No. 4,625,012. The use of the high molecular weight polyols described above allow the preparation of silane terminated polyethers by the reaction of isocyanato silanes with the polyols without the addition of additional catalysts. The residual calcium catalyst from the polyol formation reaction sequence described above is sufficient to catalyze the reaction. If desired, a standard polyurethane catalyst such as those disclosed in U.S. Patent No. 4,625.012 at column 5, lines 14 to 23, may be added. The reaction of the isocyanato silane with a polyol can take place at a temperature of 0°C or greater, more preferably 25°C or greater, and preferably 150°C or less and most preferably 80°C or less. This reaction is preferably performed under an inert atmosphere. The reaction is allowed to proceed until the desired silane functionality is achieved. Where a high molecular weight polyol is used it is preferred that a sufficient of amount isocyanato silane be used to react with all of the hydroxyl functionality of the polyol. In this embodiment the resulting prepolymer exhibits excellent physical properties and stability. Where the polyol used is a lower molecular weight polyol, it is desirable to use less than a stoichiometric amount of isocyanatosilane as compared to hydroxyl moieties, such that the resulting product has some residual hydroxyl moieties in the prepolymer prepared. This results in a product that has better physical properties at cure. In this embodiment, the ratio of hydroxyl moieties to isocyanate moieties of the isocyanoto silanes is preferably from 0.75:1.0 to 0.95:1.0.

In another embodiment, the polymer may be a polyurethane based backbone having hydrolyzable silane groups. Such materials are disclosed in Chang, U.S. Patent No. 4,622,369 and Pohl, U.S. Patent 4,645,816.

In another embodiment, the backbone can be a flexible polymer such as a polyether or polyolefin, having silicon moieties having bound thereto. A flexible polymer with unsaturation can be reacted with a compound having a hydrogen or hydroxyl moiety bound to silicon wherein the silicon moiety also has one or more carbon chains with unsaturation. The silicon compound can be added to the polymer at the point of unsaturation by a hydrosilylation reaction. This reaction is described in Kawakubo, U.S. Patent 4,788,254, column 12, lines 38 to 61, U.S. 3,971,751; U.S. 5,223,597; U.S. 4,923,927; U.S. 5,409,995 and U.S. 5,567,833.

The polymer prepared can be cross-linked in the presence of a hydrosilylation cross-linking agent and hydrosilylation catalyst as described in U.S. Patent 5,567,833 at column 17, lines 31 to 57, and U.S. Patent 5,409,995.

The prepolymer is present in the adhesive composition in sufficient amount such that the adhesive is capable of bonding glass to another substrate, such as metal, plastic, a composite or fiberglass. Preferably the substrates are painted and more preferably the substrates are painted with acid resistant paints, such as acrylic melamine silane modified coatings (DuPont Gen IV paints), melamine carbamate coatings, two part urethane coatings, or acid epoxy cure coatings. The adhesives of the invention are especially good for bonding windows to acrylic melamine silane modified coatings (DuPont Gen IV paints). Preferably the prepolymer is present in an amount of 30 percent by weight or greater based on the weight of the adhesive, more preferably 40 percent by weight or greater, even more preferably 45 percent by weight or greater and most preferably 50 percent by weight or greater. More preferably the prepolymer is present in an amount of 99.8 percent by weight or less based on the weight of the adhesive and most preferably 85 percent by weight or less.

The adhesive composition further comprises one or more tin catalysts which catalyzes the silanol condensation reaction. Tin catalysts useful for the silanol condensation reaction are well-known in the art. Among preferred tin compounds useful for silanol condensation are, dialkyltin(IV) salts of organic carboxylic acids, such as dibutyltin diacetate, dimethyl tin dilaurate, dibutyltin dilaurate, dibutyltin maleate ordioctyltin diacetate; tin carboxylates, such as tin octylate or tin naphthenate; reaction products of dialkyltin oxides and phthalic acid esters or alkane diones; dialkyltin diacetyl acetonates, such as dibutyltin diacetylacetonate (also commonly referred to as dibutyltin acetylacetonate); dialkyltinoxides, such as dibutyltinoxide; tin(II)salts of organic carboxylic acids, such as tin(II) diacetate, tin(II) dioctanoate, tin(II) diethylhexanoate or tin(II) dilaurate; dialkyl tin (IV) dihalides, such as dimethyl tin dichloride; and stannous salts of carboxylic acids, such as stannous octoate, stannous oleate, stannous acetate, or stannous laurate. These silanol condensation catalysts may be used individually or in combinations of 2 or more. Preferred catalysts are the dialkyl tin dicarboxylates, dialkyl tin oxides, dialkyl bis(acetylacetonates), reaction products of dialkyltin oxide and phthalic acid esters or an alkane dione, dialkyltin halides and dialkyl tin oxides. Even more preferred catalysts are dibutyltin dilaurate, dimethyltin dilaurate, dibutyltin maleate, dibutyltin diacetate, tin octylate, tin naphthenate, reaction products of dibutyltin oxide and phthalic acid esters or pentanedione, dibutyltin diacetylacetonate, dibutyltinoxide, and dimethyl tin chloride. The amount of catalyst used in the formulation is that amount which facilitates the cure of the adhesive without causing degradation of the adhesive after cure. The amount of catalyst in the adhesive formulation is preferably 0.01 percent by weight or greater, more preferably 0.1 percent by weight or greater, and most preferably 0.2 percent by weight or greater, and preferably 5 percent by weight or less, even more preferably 1.0 percent by weight or less and most preferably 0.4 percent by weight or less.

The adhesive composition may further comprise a curing agent for the siloxy moiety. Such compound can be a hydrolyzable silicone compound, such compounds are disclosed in U.S. Patent 5,541,266. Hydrolyzable silicon compounds useful include those represented by formula 7: 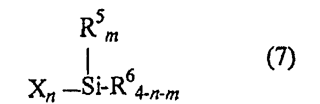 X represents a hydrolyzable group. R⁵ represents a monovalent hydrocarbon group, and is preferably a lower alkyl group. R⁶ represents a monovalent organic group containing an amino group or an imino group and having a ratio of carbon atom number to nitrogen atom number (C/N ratio) of more than 3. The C/N ratio is preferably 4 or more 3; m represents 0, 1 or 2 and preferably 0 or 1; n represents 1, 2 or 3; and (m+n) is less than 4 and preferably (m+n) is 3. n Is preferably 2 or 3. The molecular weight of the hydrolyzable silicon compound is preferably 1000 or less. R⁶ includes R⁷ N(R⁸)―R⁹―N(R¹⁰)―R¹¹ wherein R⁷ and R⁸ each represents a divalent hydrocarbon group containing 2 or more carbon atoms, and at least one of R⁷ and R⁹ contains 4 or more carbon atoms. R⁸, R¹⁰, and R" each represents a hydrogen atom or a monovalent hydrocarbon group, preferably an alkyl group containing 1 to 3 carbon atoms.

The specific but non-limiting examples of the above mentioned hydrolyzable silicon compound are shown below

H₂N(CH₂)₆NH(CH₂)₃Si(OCH₃)₃,

H₂N(CH₂)₈NH(CH₂)₃Si(OCH₃)₃,

H₂N(CH₂)₆NH(CH₂)₃Si(CH₃)(OCH₃)₂,

H₂N(CH₂)₆NH(CH₂)₃Si(OCH₂CH₃)₃,

H₂N(CH₂)₂NHCH₂-ph-(CH₂)₂Si(OCH₃)₃,

and

H₂N(CH₂)₄NHCH₂-ph-(CH₂)₂Si(OCH₃)₃,

wherein ph represents a p-phenylene group.

The hydrolyzable silicon compound is used in an amount of from 0.01 to 20 parts by weight, and preferably from 0.1 to 10 parts by weight, per 100 parts by weight of the oxyalkylene polymer having a reactive silicon group and capable of cross-linking on siloxane bond formation. If it exceeds 20 parts by weight, the rubber physical properties after curing are adversely affected.

Further examples of such hydrolyzable silicone compounds capable of cross-linking the silicone reactive polymer are disclosed in U.S. Patent 5,541,266. Other such potential additives include organic silicone compounds B as disclosed in U.S. Patent 4,837,274, see column 7, line 12 to column 9, line 15.

The adhesive formulation may contain other additives commonly used in adhesives formulations as known to those skilled in the art. The adhesive of the invention may be formulated with fillers known in the art for use in adhesive compositions. By the addition of such materials, physical properties such as viscosity, flow rates, and sag can be modified. However, to prevent premature hydrolysis of the moisture sensitive groups of the prepolymer, it is preferable to thoroughly dry the fillers before admixture therewith.

Optional components of the adhesive of the invention include reinforcing fillers. Such filters are well-known to those skilled in the art and include carbon black, titanium dioxide, calcium carbonate, surface treated silica, titanium oxide, fumed silica, and talc. Preferred reinforcing fillers comprise carbon black. In one embodiment, more than one reinforcing filler may be used, of which one is carbon black, and a sufficient amount of carbon black is used to provide the desired black color to the adhesive. Preferably the only reinforcing filler used is carbon block. The reinforcing fillers are used in sufficient amount to increase the strength of the adhesive and to provide thixotropic properties to the adhesive. Preferably the reinforcing filler is present in an amount of 1 part by weight of the adhesive composition or greater, more preferably 15 parts by weight or greater and most preferably 20 parts by weight or greater. Preferably the reinforcing filler is present in an amount of 40 parts by weight of the adhesive composition or less, more preferably 35 parts by weight or less and most preferably 33 parts by weight or less.

Among optional materials in the adhesive composition are clays. Preferred clays useful in the invention include kaolin, surface treated kaolin, calcined kaolin, aluminum silicates and surface treated anhydrous aluminum silicates. The clays can be used in any form which facilitates formulation of a pumpable adhesive. Preferably the clay is in the form of pulverized powder, spray dried beads or finely ground particles. Clays may be used in an amount of 0 part by weight of the adhesive composition or greater, more preferably 1 part by weight or greater and even more preferably 6 parts by weight or greater. Preferably the clays are used in an amount of 20 parts by weight or less of the adhesive composition and more preferably 10 parts by weight or less.

The adhesive composition of this invention may further comprise plasticizers so as to modify the rheological properties to a desired consistency. Such materials are preferably free of water, inert to reactive groups and compatible with the polymer used in the adhesive. Suitable plasticizers are well-known in the art and preferable plasticizers include alkyl phthalates such as dialkyl phthalate wherein the alkyl phthalate is linear with mixed C₇, C₉ and C₁₁ alkyl groups, diisononyl phthalate diisododecyl phthalate, dioctylphthalate or dibutylphthalate, partially hydrogenated terpene commercially available as "HB-40", trioctyl phosphate, epoxy plasticizers, toluene-sulfamide, chloroparaffins, adipic acid esters, castor oil, toluene, xylene, n-methylpyrolidinone and alkyl naphthalenes. The preferred plasticizers are the phthalates. The more preferred plasticizers are the dialkyl phthalates wherein the alkyl group is mixed linear C₇ C₉ and C₁₁, diisononyl phthalate or diisododecyl phthalate. The amount of plasticizer in the adhesive composition is that amount which gives the desired rheological properties and which is sufficient to disperse the catalyst and other components in the system and to give the desired viscosity. The amounts disclosed herein include those amounts added during preparation of the prepolymer and during compounding of the adhesive. Preferably plasticizers are used in the adhesive composition in an amount of 0 part by weight or greater based on the weight of the adhesive composition, more preferably 5 parts by weight or greater, even more preferably 10 parts by weight or greater and most preferably 20 parts by weight or greater. The plasticizer is preferably used in an amount of 45 parts by weight or less based on the total amount of the adhesive composition, more preferably 40 parts by weight or less, even more preferably 30 parts by weight or less and most preferably 25 parts by weight or less.

The adhesive of this invention may further comprise stabilizers which function to protect the adhesive composition from moisture, thereby inhibiting advancement and preventing premature cross-linking of the polymer capable of cross-linking in the adhesive formulation. Included among such stabilizers are hydrocarbyl alkoxy silanes, such as vinyl trimethoxy silane, diethylmalonate and alkylphenol alkylates. Such stabilizers are preferably used in an amount of 0.1 part by weight or greater based on the total weight of the adhesive composition, preferably 0.5 part by weight or greater and more preferably 0.8 part by weight or greater. Such stabilizers are used in an amount of 5.0 parts by weight or less based on the weight of the adhesive composition, more preferably 2.0 parts by weight or less and most preferably 1.4 parts by weight or less.

Optionally, the adhesive composition may further comprise a thixotrope. Such thixotropes are well-known to those skilled in the art and include alumina, limestone, talc, zinc oxides. sulfur oxides, calcium carbonate, perlite, slate flour, salt (NaCl), and cyclodextrin. The thixotrope may be added to the adhesive of the composition in a sufficient amount to give the desired rheological properties. Preferably the thixotrope is present in an amount of 0 part by weight or greater based on the weight of the adhesive composition. preferably 1 part by weight or greater. Preferably the optional thixotrope is present in an amount of 10 parts by weight or less based on the weight of the adhesive composition and more preferably 2 parts by weight or less.

In some embodiments, it is desirable to add an adhesion promoter to the composition. An adhesion promoter can be added to enhance adhesion to either the glass or to the surface of the substrate to which the glass is bonded. Adhesion promoters known to those skilled in the art may be used. Among preferred adhesion promoters for adhesion to coated surfaces, such as those coated with Gen IV paints commonly used in the automotive industry, are the amino alkoxy silanes, vinyl alkoxy silanes, isocyanto alkoxy silanes and isocyanurate functional alkoxy silanes. More preferred adhesion promoters include gamma-glycidoxypropyltrimethoxy silane, gamma-aminopropyltrimethoxy silane, gamma-isocyanatopropyltrimethoxy silane, n-beta-(aminoethyl)- gamma-aminopropyltrimethoxy silane, n-(2-aminoethyl)-3-aminopropylmethyldimethoxy silane, 3-aminopropylmethyldimethoxy silane, *bis*-(gamma-trimethoxysilylpropylamine), n-phenylgamma-aminopropyltrimethoxysilane, gamma-isocyanatopropylmethyldimethoxy silane, gamma-isocyanatopropyltriethoxy silane. beta (3,4-epoxycyclohexyl)ethyltriethoxysilane, gamma-glycidoxypropylmethyldimethoxy silane, tris(gamma-trimethoxysilylpropyl)isocyanurate, vinyltriethoxysilane, or vinyltrimethoxysilane. Such adhesion promoters are present in sufficient amount to promote the adhesion of the adhesive to the glass or other substrate surface to the desired level usually determined by testing the lap shear strength and failure mode of the bond to the substrate. Preferably the amount of adhesion promoter is 10 parts by weight or less based on the weight of the adhesive; more preferably 5 parts by weight or less and most preferably 2 parts by weight or less. Preferably the amount of adhesion promoter is 0.01 part by weight or greater based on the weight of the adhesive; more preferably 0.1 parts by weight or greater and most preferably 0.5 part by weight or greater.

The adhesive composition can also contain heat stabilizers known in the art. Among preferred heat stabilizers are alkyl substituted phenols, phosphites, sebacates, and cinnamates. Among more preferred heat stabilizers are bis(1,2,2.6,6,-pentamethy-4-piperidinyl) sebacale, Irgafox-168, ethylene bis(oxyethylene) bis(3-tert-butyl-4-hydroxy-5(methylhydrocinnamate), tetrakis isodecyl 4,4' isopropylidene diphosphite, and butylated hydroxytoluene The preferred class of heat stabilizers are the sebactes such as bis(1,2,2,6,6,-pentamethy-4-piperidinyl) sebacate. Preferably the amount of heat stabilizer is 5 parts by weight or less based on the weight of the adhesive; more preferably 2 parts by weight or less and most preferably 1.0 part by weight or less. Preferably the amount of heat stabilizer is 0.01 part by weight or greater based on the weight of the adhesive; and most preferably 0.5 part by weight or greater.

Other components commonly used in adhesive compositions may be used in the adhesive composition of this invention. Such materials are well-known to those skilled in the art and may include ultraviolet stabilizers and antioxidants.

As used herein, all parts by weight relative to the components of the adhesive composition are based on 100 total parts by weight of the adhesive composition and all percentages by weight are based on the weight of the adhesive composition. The sealant composition of this invention may be formulated by blending the components together using means well-known in the art. Generally the components are blended in a suitable mixer. Such blending is preferably conducted in an inert atmosphere and in the absence of atmospheric moisture to prevent premature reaction. It may be advantageous to add any plasticizers to the reaction mixture for preparing the prepolymer so that such mixture may be easily mixed and handled. Alternatively, the plasticizers can be added during blending of all the components. Once the sealant composition is formulated, it is packaged in a suitable container such that it is protected from atmospheric moisture. Contact with atmospheric moisture could result in premature cross-linking of the prepolymer.

The sealant composition of the invention is used to bond porous and nonporous substrates together. The sealant composition is applied to the glass surface and is thereafter contacted with a second substrate. Thereafter the adhesive is exposed to curing conditions. In a preferred embodiment the other substrate is a plastic, metal, fiberglass or composite substrate which may optionally be painted. This method is especially effective for substrates painted with an acid resistant paint. In preferred embodiments, the surfaces to which the adhesive is applied are cleaned prior to application, see for example U.S. Patents 4,525,511, 3,707,521 and 3,779,794. The glass is prepared by cleaning the surface to which the adhesive composition is to be applied. A solvent wipe can be used to do this. Generally a cloth or other device with an appropriate solvent is used to clean the surface. Thereafter a primer may be applied to the portion of the window to which the adhesive is to be applied. Glass primers and application methods for such primers are well-known in the art. Typically the primer is applied with a brush or by a robot. A primer is not necessary where the adhesive is formulated so as to eliminate the need for one. In a preferred embodiment of the invention the substrate is a building or an automobile. The adhesive is preferably deposited as a bead on the portion of the glass to be bonded into the substrate. The bead can be deposited by any known method to those skilled in the art. In one embodiment, the bead can be deposited using a caulking gun or similar type of manual application device. In another embodiment, the bead may be deposited by an extrusion apparatus such as a robotic extrusion apparatus. The adhesive is located on the portion of the window which will be contacted with the structure into which it will be bonded. In one preferred embodiment, the adhesive is placed about the periphery of one face of the window. Typically the adhesive is in the form of a bead located about the periphery of the window. Preferably the bead is a profiled shape along the cross-sectional plane. In the embodiment where the glass is window glass designed for use in automobiles, the bead is applied to the portion of the glass to be contacted with the flange of the automobile window. The window can then be placed into the structure with the adhesive contacting both the window and the structure to which the window is to be bonded into. This contacting is performed by means well-known to those skilled in the art. In particular, the glass can be placed in the structure by hand, by the use of a robot. Generally the sealants of the invention are applied at ambient temperature in the presence of atmospheric moisture. Exposure to atmospheric moisture is sufficient to result in curing of the sealant. Curing may be further accelerated by applying heat to the curing sealant by means of convection heat, or microwave heating. Preferably the sealant of the invention is formulated to provide a working time of 6 minutes or greater more preferably 10 minutes or greater. Preferably the working time is 15 minutes or less and more preferably 12 minutes or less. Further, the adhesive of the invention demonstrates a cure rate after six hours of 50 Psi (3.45 mPa) or greater, more preferably 70 psi (4.83 mPa) or greater after six hours and more preferably 100 psi (6.90 mPa) or greater after six hours.

Molecular weights as described herein are determined according to the following procedure: determined using the Waters Model 590 Gel Permeation Chromatograph. This unit is connected to a multiwave length detector and a differential refractometer to measure the elution volume. A column of styrogel is used for the size exclusion and it can determine molecular weights from 250 to 50,000. The molecular weight of the prepolymer is then determined by measuring the elution volume through this column using tetrahydrofuran as the eluting solvent. The molecular weight is then calculated from a calibration curve of molecular weight vs. elution volume obtained from a polystyrene polyethylene glycol column. The quoted molecular weights are weight average molecular weights unless otherwise specified.

The following examples are provided to more fully illustrate the invention, and are not intended to limit the scope of the claim. Unless otherwise stated, ail parts and percentages are by weight.

The following are tests used for the prepared sealants.

A 6.3 mm (width) x 6.3 mm (height) x 76.2 mm (length) size sealant bead is placed on 101.6 mm x 101.6 mm piece of an acid resistant paint panel and the assembly is cured for a specific time in the condition of 23°C and 50 percent relative humidity. The cured bead is then cut with a razor blade through to the painted surface at a 45 degree angle while pulling back the end of the bead at 180 degree angle. Notches are cut every 3 mm on the painted surface. The degree of adhesion is evaluated as adhesive failure (AF) and/or cohesive failure (CF). In case of adhesive failure, the cured bead can be separated from the painted surface, while in cohesive failure, separation occurs within the sealant bead as a result of cutting and pulling. The tested paint substrate can be used as supplied, or treated by wiping with isopropanol (IPA) or naphtha (NP). For the sealant of the invention, adhesion of a sealant develops sooner to the treated substrate than to the untreated one.

A sealant approximately 6.3 mm wide by 8 mm high is applied along the width of the glass and approximately 6 mm to 12 mm from the primed end. The paint substrate is immediately placed on the sealant and the sample is allowed to cure at the condition of the 23°C and 50 percent relative humidity for 5 days. The sample was then pulled at a rate of 1 inch/minute (2.5 cm/min)with an Instron Tester.

### Example 1. Preparation of a high molecular weight polyether diol

A mixture of 97.3 grams of polyglycol P1000, a 1000 MW polypropylene oxide diol from which essentially all of the catalyst (KOH) had been removed, and 9.73 g of 10 percent calcium, CEM ALL D10 (50 percent by weight calcium isooctoate in mineral spirits carrier, and which contains no glycol ether stabilizers, available from OMG Americas, Cleveland, Ohio) was placed in a dry, steam heated and stirred pressure reactor which was then purged with nitrogen several times. The mixture was heated to 100°C and 1,985 grams of propylene oxide was added with rapid stirring. The product was a liquid having an equivalent weight of 5,218 determined by a wet method for hydroxyl analysis. The number average molecular weight of the product was 9,978 as determined by gel permeation chromatography using polyglycol standards and a polydispersity of 1.1 determined by size exclusion chromatography (gel permeation chromatography).

### Example 2. Preparation of high molecular weight silyl terminated polyether

In a dried, heated, nitrogen purged and mechanically stirred 500 milliliter round bottom flask, were added 134.94 grams of the product of Example 1, 6.33 grams of Siliquest A1310, gamma-isocyanatopropyltriethoxysilane, and 1.52 grams dibutyl tin dilaurate. The mixture was heated to 100°C with stirring and immediately allowed to cool to room temperature. A 30 mil film was drawn on glass plates. The film was allowed to moisture cure overnight. The film was tack free in 24 hours. The film was placed in a 70 percent humidity chamber for 5 days and then placed in an oven at 50°C overnight. The cured film had a 73 psi tensile strength, 35 psi modulus, and a 347 percent elongation at break.

### Examples 3 to 7

Moisture curable sealant compositions were prepared under anhydrous conditions by compounding silylated prepolymers described below with the components described below. The components, except carbon black, were charged to a 2 gallon planetary mixer and mixed for 20 minutes under vaccum, then dried carbon black was added and mixed for 20 minutes under vaccum. Finally, the adhesive was filled into plastic tubes. Each sealant was tested for adhesion to primed glass, primed paint, unprimed DuPont Gen IV paint, unprimed 2 part urethane paints, and unprimed diamond coat paint using the Quick Knife adhesion test. The sealants were also tested for tensile strength, elongation and lap shear strength. The formulation components are compiled in Table 1. The formulations are compiled in Table 2 and the results of testing are compiled in Table 3.

**Table 1**

| | |
|---|---|
| Prepolymer A | Kaneka S-303H methoxysilyl-terminated polypropyleneoxide based polyether |
| Prepolymer B | Prepolymer of Example 2 |
| Prepolymer C | Kaneka SAX-400 trifunctional polypropyleneoxide polyether with dimethoxymethyl silyl terminal groups having a molecular weight of 20,000 |
| Plasticizer | Palatinol 711P mixed branched alkyl phthalate plasticizer |
| Catalyst | Neostann U-220 dibutyl tin bisacetylacetonate |
| Stabilizer A | Silquest A-171 vinyl trimethoxy silane |
| Adhesion Promoter A | Silquest A-1120 n-butyl(aminoethyl) gamma-aminopropyl trimethoxysilane |
| Adhesion Promoter B | Silquest A-174Gamma-methyl acryloxy propyl trimethoxy silane |
| Adhesion Promoter C | Silquest A-187 Gamma-glycidyl trimethoxypropyl silane |
| Heat Stabilizer B | |

**Table 2**

| Example/Component | 3 | 4 | 5 | 6 | 7 |
|---|---|---|---|---|---|
| Prepolymer A | 43.96 | 46.28 | 46.82 | | |
| Prepolymer B | | | | 49.25 | |
| Prepolymer C | | | | | 55.6 |
| Plasticizer | 20.35 | 21.03 | 21.28 | 21.10 | 15 |
| Catalyst | 0.44 | 0.46 | 0.47 | 0.45 | 0.40 |
| Stabilizer A | | 0.76 | 1.71 | 0.70 | |
| Adhesion Promoter A | 1.14 | | | | 1* |
| Adhesion Promoter B | 0.73 | | | | |
| Adhesion Promoter C | | 1.17 | | 1.10 | |
| Carbon Black | 33.38 | 30.30 | 30.66 | 27.40 | 27 |
| Heat Stabilizer B | | | | | 1 |
| • DAMO-D adhesion promoter for Huls, same chemical composition as Adhesion Promoter A | | | | | |

**Table 3**

| Example/ Test | 3 | 4 | 5 | 6 | 7 |
|---|---|---|---|---|---|
| Quick Knife Adhesion | 100 % CF | | | | |
| Glass Primer | 100 % CF | 100 % CF | 100 % CF | 100 % CF | |
| Paint Primer | 100 % CF | 100 % CF | 100 % CF | 100 % CF | |
| Gen. IV | 100 % CF | 100 % CF | 100 % CF | 100 % CF | 100 % CF 332 psi |
| 2 Part Paint | 100 % CF | | | | |
| Diamond Coat | 100 % CF | | | | 100 % CF 506 psi |
| Cure Rate | | | | | |
| 1.5 Hour psi | | 5 | | 34 | |
| 3 Hour psi | | 40 | | 56 | |
| 6 Hour psi | | 134 | | 134 | |
| Tensile Strength psi | 1028 | | | 1025 | |
| Elongation Percentage | 378 | | | 423 | |
| Lap Shear Mpa | 2.4 | | | 3.4 | |

### Example 8. Synthesis of silylated prepolymer

A polyether silylated prepolymer was prepared by thoroughly mixing 2366.2 grams (0.388eq.) of polypropylene glycol diol having hydroxyl equivalent weight of 6100 with 83.8 grams (0.409 eq.) of isocyanatopropyl trimethoxysilane. The reaction was carried out in a reaction vessel at 75°C under nitrogen blanket for 4 hours until no isocyanate groups could be detected by infrared analysis. 1050 Grams of dialkyl phthalate plasticizer containing mixed C₇-, C₉- and C₁₁- linear alkyl group was added to the mixture and thoroughly mixed. The viscosity of the reaction mixture at 23°C was 17,700 cps.

### Example 9. Synthesis of silylated prepolymer

A polyether silylated prepolymer was prepared by thoroughly mixing 2,355.4 grams (0.438 eq.) of polypropylene glycol triol having hydroxyl equivalent weight of 5,373 with 94.7 grams (0.462 eq.) of isocyanatopropyl trimethoxysilane. The reaction was carried out in a reaction vessel at 75°C under nitrogen blanket for 4 hours until no isocyanate groups could be detected by infrared analysis.

1,050 Grams of the dialkyl phthalate plasticizer were added to the mixture and thoroughly mixed. The viscosity of the reaction mixture at 23°C was 67,800 cps.

### Examples 10 - 13

Polyether silylated prepolymers were prepared by reacting mixed diols containing polypropylene glycol diols having hydroxyl equivalent weights of 6,100 and 1,000 with isocyanatopropyl trimethoxysilane. The reaction was carried out in a reaction vessel by first heating to 75°C, then to 85°C under nitrogen blanket for 4 hours until no isocyanate groups could be detected by infrared analysis. A dialkyl phthalate plasticizer was added to each mixture and thoroughly mixed. The amounts of the reactants, the plasticizer used and viscosity data are listed below:

**Table 4**

| | Example 10 | Example 11 | Example 12 | Example 13 |
|---|---|---|---|---|
| Polypropylene glycol diol, ew=6100 | 950 | 900 | 850 | 800 |
| | | | | |
| Polypropylene glycol diol, ew=1000 | 50 | 100 | 150 | 200 |
| | | | | |
| Isocyanatopropyl trimethoxysilane | 45.9 | 54.9 | 54.6 | 72.8 |
| | | | | |
| Dialkyl phthalate Plasticizer | 448 | 452 | 456 | 460 |
| | | | | |
| Total | 1493.9 | 1506.9 | 1510.6 | 1532.8 |
| | | | | |
| Viscosity, 23°Ccps | 15800 | 14290 | 11600 | 9760 |

### Examples 14-17. Compounding of the prepolymers

The silylated prepolymers described above were compounded with vinyl trimethoxysilane, gamma-glycidoxypropyltrimethoxysilane, catalyst and carbon black. The prepolymers, vinyl trimethoxysilane, gamma-glycidoxypropyltrimethoxysilane, catalyst were charged to a 2 gallon planetary mixer and mixed for 20 minutes under vaccuum, then dried carbon black was added and mixed for 20 minutes under vacuum. Finally, the adhesive was filled into plastic tubes. Compositions and physical properties of some adhesives prepared listed in Table 5 :

**Table 5**

| | Example 14 | Example 15 | Example 16 | Example 17 |
|---|---|---|---|---|
| Prepolymer in Example 8 | 1169.6 | 877.2 | 584.8 | 292.4 |
| | | | | |
| Prepolymer in Example 9 | 0.0 | 292.4 | 584.8 | 877.2 |
| | | | | |
| Vinyl trimethoxysilane | 16.0 | 16.0 | 16.0 | 16.0 |
| | | | | |
| gamma-Glycidoxy propyltrimethoxysilane | 11.2 | 11.2 | 11.2 | 11.2 |
| | | | | |
| Dibutyl tin bis(acetylacetonate) | 3.2 | 3.2 | 3.2 | 3.2 |
| | | | | |
| Carbon black | 400.0 | 400.0 | 400.0 | 400.0 |
| | | | | |
| Total | 1600.0 | 1600.0 | 1600.0 | 1600.0 |
| | | | | |
| Tensile strength, psi | 683 | 610 | 512 | 470 |
| | | | | |
| Elongation, % | 351 | 299 | 222 | 191 |
| | | | | |
| Storage modulus, 25 C | 10.23 | 8.12 | 7.22 | 4.72 |
| | | | | |
| Cure rate, 23°C,50% RH 3 hours | 15.8 | 35.8 | 75.4 | 87.1 |
| | | | | |
| 6 hours | 43.7 | 69.5 | 137.6 | 140.3 |

## Claims

1. A method of bonding a window into a structure which comprises applying to a window an adhesive comprising:-
a polyether having silane moieties capable of silanol condensation wherein the polyether has a molecular weight of 6000 or greater
a catalyst comprising 1.0 percent by weight or less of a dialkyltin dicarboxylate, a dialkyltin oxide, a dialkyl bis(acetylacetonate), a reaction product of dialkyltin oxide and phthalic acid ester or an alkane dione, dialkyltin halide and dialkyl tin oxide, and
2.0 parts by weight or less per one hundred parts by weight of adhesive of an aminoalkoxysilane;
locating the adhesive between the window and the unprimed window frame of the structure and allowing the adhesive to moisture cure.

2. The method of Claim 1 wherein the polyether has a molecular weight of 10,000 or greater.

3. A method according to Claim 1 or 2 wherein the adhesion promoter is gamma-aminopropyltrimethoxy silane, *n*-beta-(aminoethyl)-gamma-aminopropyl trimethoxy silane, *n*-(2-amino ethyl)-3-aminopropylmethyl dimethoxy silane, 3-aminopropylmethyldimethoxy silane, bis-(gamma-trimethoxy silylpropyl amine), *n*-phenyl-gamma-aminopropyl trimethoxysilane.

4. A method according to Claim 3 wherein the unprimed structure is metal, plastic, or a composite optionally coated with a coating.

5. The method according to any one of Claims 1 to 4 wherein the polyether is a polyalkylene oxide ether.

6. The method according to Claim 5 wherein the polymer is a high molecular weight polyol prepared by the reaction of one or more compounds having one or more active hydrogen atoms with one or more alkylene oxides in the presence of a catalyst consisting of calcium having counter-ions of carbonate and a C₆₋₁₀ alkanoate in a solvent which does not contain active hydrogen atoms wherein the polyol prepared has an equivalent weight of from 1,000 to 20,000, a polydispersity of 1.30 or less and a residual catalyst level of from 0 to 1,000 ppm.

7. The method according to Claim 6 wherein the polymer is a polyol according to Claim 1 which corresponds to the formula:
R³-((CH(R⁴)CH(R⁴)O)_{q}-H)ₚ
wherein:
R³ is the residue of a compound having from 1 to 8 active hydrogen atoms or oxygen;
R⁴ is independently in each occurrence a hydrogen or a C₁₋₆ saturated or unsaturated hydrocarbon chain;
q is independently in each occurrence a number such that the equivalent weight of the polyol is from 2,000 to 16,000; and
p is independently in each occurrence from 1 to 8.

8. The method according to Claim 7 wherein:
R³ is independently in each occurrence a C₁₋₈ alkyl or cycloalkyl moiety or oxygen;
R⁴ is independently in each occurrence hydrogen, methyl or ethyl; and
p independently in each occurrence 4 or less.

9. The method according to Claim 8 wherein:
R⁴ is independently in each occurrence hydrogen or methyl; and
p is independently in each occurrence 3 or less.

10. The method according to Claim 6 wherein the residual catalyst is a calcium salt and is present in an amount of from 200 to 1,000 ppm and the polyol has a polydispersity of 1.20 or less and an unsaturation level of 0.04 meq/g or less.

## Patentansprüche

1. Verfahren zum Einkleben eines Fensters in eine Struktur, welches umfaßt:
Auftragen eines Klebstoffes an ein Fenster, der umfaßt:
einen Polyether, der Silaneinheiten hat, die zur Silanolkondensation fähig sind, wobei der Polyether ein Molekulargewicht von 6.000 oder größer hat,
einen Katalysator, der 1,0 Gew.-% oder weniger eines Dialkylzinndicarboxylates, eines Dialkylzinnoxids, eines Dialkylbis-(acetylacetonates), eines Reaktionsproduktes von Dialkylzinnoxid und Phthalsäureester oder eines Dialkyldions, Dialkylzinnhalogenid und Dialkylzinnoxid umfaßt; und
2,0 Gew.-Teile oder weniger pro 100 Gew.-Teile von Klebstoff eines Aminoalkylsilans;
Anordnen des Klebstoffes zwischen dem Fenster und dem nicht mit Primer versehenen Fensterrahmen der Struktur; und Ermöglichen der Feuchtigkeitsaushärtung des Klebstoffes.

2. Verfahren nach Anspruch 1, bei welchem der Polyether ein Molekulargewicht von 10.000 oder größer hat.

3. Verfahren nach Anspruch 1 oder 2, bei welchem der Haftpromotor gamma-Aminopropyltrimethoxysilan, n-beta-(Aminoethyl)-gamma-aminopropyltrimethoxysilan, n-(2-Amino-ethyl)-3-aminopropylmethyldimethoxysilan, 3-Aminopropylmethyldimethoxysilan, Bis-(gamma-trimethoxysilylpropylamin), n-Phenylgamma-aminopropyltrimethoxysilan ist.

4. Verfahren nach Anspruch 3, bei welchem die nicht mit Primer versehene Struktur Metall, Kunststoff oder ein Verbundmaterial, wahlweise beschichtet mit einer Beschichtung, ist.

5. Verfahren nach einem der Ansprüche 1 bis 4, bei welchem der Polyether ein Polylakylenoxidether ist.

6. Verfahren nach Anspruch 5, bei welchem das Polymere ein Polyol mit hohem Molekulargewicht ist, hergestellt durch die Reaktion von einer oder mehreren Verbindungen, die ein oder mehrere aktive Wasserstoffatome besitzen, mit einem oder mehreren Alkylenoxiden in Anwesenheit eines Katalysators, der aus Calcium aufweisenden Gegenionen von Carbonat und einem C₆₋₁₀-Alkanoat besteht, in einem Lösungsmittel, das keine aktiven Wasserstoffatome enthält, wobei das hergestellte Polyol ein Äquivalentgewicht von 1.000 bis 20.000, eine Polydispersität von 1,30 oder weniger und einen Gehalt an. rückständigem Katalysator von 0 bis 1.000 ppm hat.

7. Verfahren nach Anspruch 6, bei welchem das Polymere ein Polyol entsprechend Anspruch 1 ist, das der Formel entspricht:
R³-((CH(R⁴)CH(R⁴)O)_{q}-H)ₚ
worin:
R³ der Rest einer Verbindung mit 1 bis 8 aktiven Wasserstoffatomen oder Sauerstoff ist;
R⁴ unabhängig bei jedem Vorkommen ein Wasserstoff oder eine C₁₋₈ gesättigte oder ungesättigte Kohlenwasserstoffkette ist;
q unabhängig bei jedem Vorkommen ein solche Zahl ist, daß das Äquivalentgewicht des Polyols von 2.000 bis 16.000 beträgt;
p unabhängig bei jedem Vorkommen von 1 bis 8 ist.

8. Verfahren nach Anspruch 7, bei welchem:
R³ unabhängig bei jedem Vorkommen eine C₁₋₈-Alkyl- oder Cycloalkyleinheit oder Sauerstoff ist;
R⁴ unabhängig bei jedem Vorkommen ein Wasserstoff, Methyl oder Ethyl ist; und
p unabhängig bei jedem Vorkommen von 4 oder weniger ist.

9. Verfahren nach Anspruch 8, bei welchem:
R⁴ unabhängig bei jedem Vorkommen ein Wasserstoff oder Methyl ist; und
p unabhängig bei jedem Vorkommen von 3 oder weniger ist..

10. Verfahren nach Anspruch 6, bei welchem der rückständige Katalysator ein Calciumsalz ist und in einer Menge von 200 bis 1.000 ppm vorliegt, und das Polyol eine Polydispersität von 1,20 oder weniger und einen Unsättigungsgrad von 0,04 mäq/g oder weniger hat.

## Revendications

1. Procédé de collage d'une vitre sur un substrat au moyen d'une composition adhésive, comprenant :
Un polyéther ayant des groupes silane capable de se condenser en silanol, dans lequel le polyéther a une masse moléculaire de 6000 ou plus.
Un catalyseur comprenant 1,0 % ou moins en poids d'un dicarboxylate de dialkyl étain, un oxyde de dialkyl étain, un bis(acetylacetonate) de dialkyl étain, d'un produit de la réaction entre un oxyde de dialkyl étain et ester d'acide phthalique ou un alcane dione, un halogénure de dialkyl et un oxyde de dialkyl étain,
Et 2,0 % ou moins en poids d'une composition adhésive d'un aminoalkoxysilane ;
En plaçant la composition adhésive entre la vitre et l'encadrement non-apprêté du substrat et en laissant la composition adhésive durcir à l'humidité.

2. Prodédé selon la revendication 1, dans lequel le polyéther a une masse moléculaire de 10 000 ou plus.

3. Procédé selon l'une quelconque des revendications 1 ou 2, dans lequel le promoteur de l'adhérence est gamma-aminopropyltrimethoxy silane, n-beta-(aminoethyl)-gamma-amino propyl trimethoxy silane, n-(2-aminopropylmethyl dimethoxy silane, 3-aminopropylmethyldimethoxysilane, bis-(gamma-trimethoxy silylpropyl amine), n-phenyl-gamma-aminopropyl trimethoxysilane.

4. Procédé selon la revendication 3, dans lequel le substrat non-apprêtré est en métal, en plastique, ou une composition pouvant être enduite d'un revêtement.

5. Procédé selon l'une quelconque des revendications 1 à 4, dans lequel le polyéther est un éther de polyalkylene d'oxyde.

6. Procédé selon la revendication 5, dans lequel le polymère est un polyol de grande masse moléculaire, préparé par la réaction d'un ou plusieurs composés, ayant un ou plusieurs atomes hydrogénés actifs, avec un ou plusieurs alkylene d'oxyde, en présence d'un catalyseur, consistant de calcium ayant des contre-ions de carbonate et un alcanoate en C₆₋₁₀, dans un solvant ne contenant pas d'atomes d'hydrogène actif, dans lequel le polyol préparé a une masse moléculaire de 1 000 à 20 000, une polydiversité de 1,3 ou moins et une quantité de résidu de catalyseur de 0 à 1000 ppm.

7. Procédé selon la revendication 6, dans lequel le polymère est un polyol selon la revendication 1, qui correspond à la formule:
R³-((CH(R⁴)CH(R⁴)O)_{q}-Hₚ dans laquelle
R³ est le résidu du composé ayant 1 à 8 atomes d'hydrogène actif ou oxygène ;
R⁴ représente indépendamment un hydrogène ou une chaîne hydrocarbonée, saturé ou non-saturée, en C₁₋₆.
q représente indépendamment un chiffre pour lequel le poids du polyol équivalent est 2 000 à 16 000 ;
et p représente indépendamment un chiffre de 1 à 8

8. Procédé selon la revendication 7, dans lequel :
R³ représente indépendamment un groupe alkyle en C₁₋₈ ou cycloalkyle ou un oxygène ;
R⁴ représente indépendamment un hydrogène, un méthyle ou un éthyle ;
Et p représente indépendamment un chiffre de 4 ou moins

9. Procédé selon la revendication 8, dans lequel :
R³ représente indépendamment un hydrogène ou un méthyle ;
Et p représente indépendamment un chiffre de 3 ou moins

10. Procédé selon la revendication 6, dans lequel le résidu du catalyseur est un sel de calcium et est présent en une quantité de 200 à 1 000 ppm et le polyol a une polydiversité de 1,20 ou moins et un niveau d'insaturation de 0,04 meq/g ou moins.
